# EUROPEAN PATENT SPECIFICATION

(11) **EP 0 414 265 B1**
(45) Date of publication and mention of the grant of the patent: **17.01.1996**
(21) Application number: 90116271.9
(22) Date of filing: 24.08.1990
(51) Int. Cl.: G03B 17/26, G03C 3/00

(54) **Package of rolled photosensitive material**
Verpackung für eine Rolle lichtempfindliches Material
Emballage d'un matériau photosensible en forme de rouleau

(30) Priority: 25.08.1989 JP 98505/89 U; 16.02.1990 JP 13739/90 U
(43) Date of publication of application: 27.02.1991
(73) Proprietor: FUJI PHOTO FILM CO., LTD., Kanagawa (JP)
(72) Inventor: Takahashi, Hisashi, c/o Fuji Photo Film Co., Ltd., Minami Ashigara-shi, Kanagawa (JP); Shimizu, Shigehisa, c/o Fuji Photo Film Co., Ltd., Minami Ashigara-shi, Kanagawa (JP); Fujiwara, Takayuki, c/o Fuji Photo Film Co., Ltd., Minami Ashigara-shi, Kanagawa (JP); Mino, Satoshi, c/o Fuji Photo Film Co., Ltd., Minami Ashigara-shi, Kanagawa (JP); Aoki, Masashi, c/o Fuji Photo Film Co., Ltd., Minami Ashigara-shi, Kanagawa (JP)
(74) Representative: Grünecker, Kinkeldey, Stockmair & Schwanhäusser Anwaltssozietät

(56) References cited:
- EP-A- 0 181 417
- FR-A- 1 231 132
- JP-B- 6 013 386
- US-A- 4 148 395
- US-A- 4 505 387

## Description

### BACKGROUND OF THE INVENTION

### Field of the Invention

This invention relates to a package of a rolled photosensitive material for loading in a light room.

In particular, the present invention relates to a package of a rolled photosensitive material comprising the features set out in the preamble of claim 1. A similar type of rolled photosensitive material is also known from US-A-4 148 395.

### Description of the Prior Art

A package of a rolled photosensitive material for loading in a light room is loaded into a magazine with a light-shielding ability. The light-shielding ability is broken in the magazine, and the photosensitive strip material is extended through the slit of the magazine.

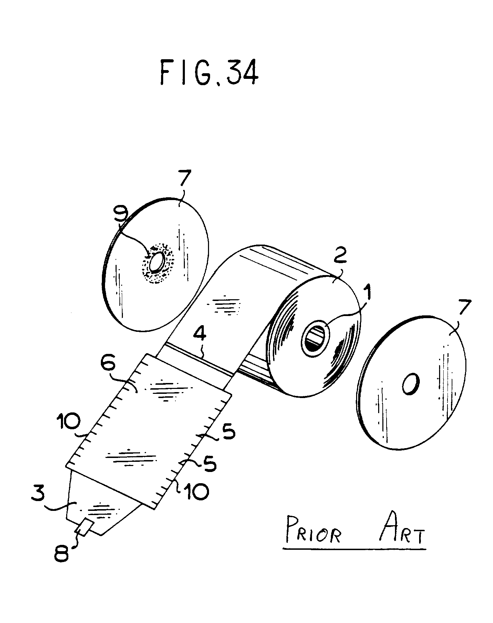

A conventional package of a rolled photosensitive material is shown in an exploded perspective view of Fig. 34 (Japanese Utility Model KOKAI No. 60-13386). In the drawing, a photosensitive strip material 2 is coiled around the core 1. A leader 3 is connected with an end portion of the photosensitive strip material 2 by a joining tape 4, and a light-shielding paper 6 is adhered to the upper surface of the leader 3. The side end portion 10 having cut lines 5 of the paper 6 protrudes from the side ends of the leader 3. The end of the leader 3 is fixed with an adhesive tape 8, and circular covers 7 are joined to the core 1 with an adhesive 9. The side end portions 10 of the light-shielding paper are folded onto the circular covers 7 to adhere thereto with an adhesive.

A package having an opaque heat shrinkable film is known as a light-shielding material (EPA 181417). Similarly, US-A-4 148 395 also describes a rolled photosensitive material where an opaque and moistureproof leader is connected with an end portion of the photosensitive strip material. Opaque and moistureproof circular end covers are also provided. Here, however, the rim or peripheral lip on each end cover has cut lines so that each end cover overlies an edge of the leader and is adhered thereto. After the exposure apparatus has been sealed to light, the remainder of the leader may be stripped from the roll tearing the end cover rims away from the rest of the end covers.

However, in the case of the above conventional package of a rolled photosensitive material having circular covers, it is composed of two members, i.e. the light-shielding paper and the circular covers for light-shielding. Therefore, many processes for packaging are necessary such as punching the circular cover and the adhesion of the circular cover to the core, the packaging is troublesome and the automation of packaging is difficult. Moreover, since the circular cover is formed out of a sheet material, the yield is low and the material cost is high.

In the case of the package having the opaque heat shrinkable film, it is difficult to impart light-shielding to the heat shrinkable film. Moreover, since the light-shielding of the inside the core is secured by the deformation of the heat shrinkable film, the light-shielding is not enought. Besides, a leader is necessary for tearing the opaque heat shrinkable film, to increase material cost.

### SUMMARY OF THE INVENTION

An object of the invention is to provide a package of a rolled photosensitive material the packaging work of which is inexpensive and very easy.

Another object of the invention is to provide a package of a photosensitive strip material which can be applied to automatic manufacturing.

Another object of the invention is to provide a package of a photosensitive strip material wherein the photosensitive strip material is easily and surely extended from a magazine or the like.

The invention has been made in order to achieve the object, and a photosensitive material is packed in a incorporated material.

Thus, the present invention provides a package of a photosensitive strip material which comprises the features set out in claim 1.

The present invention also provides a package of a rolled photosensitive material which comprises the features set out in claim 3.

The present invention further provides a package of a rolled photosensitive material which comprises the features set out in claim 5.

### BRIEF DESCRIPTION OF THE DRAWINGS

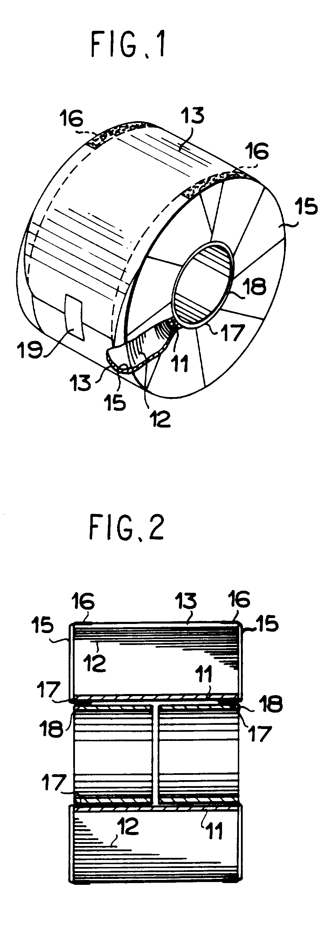

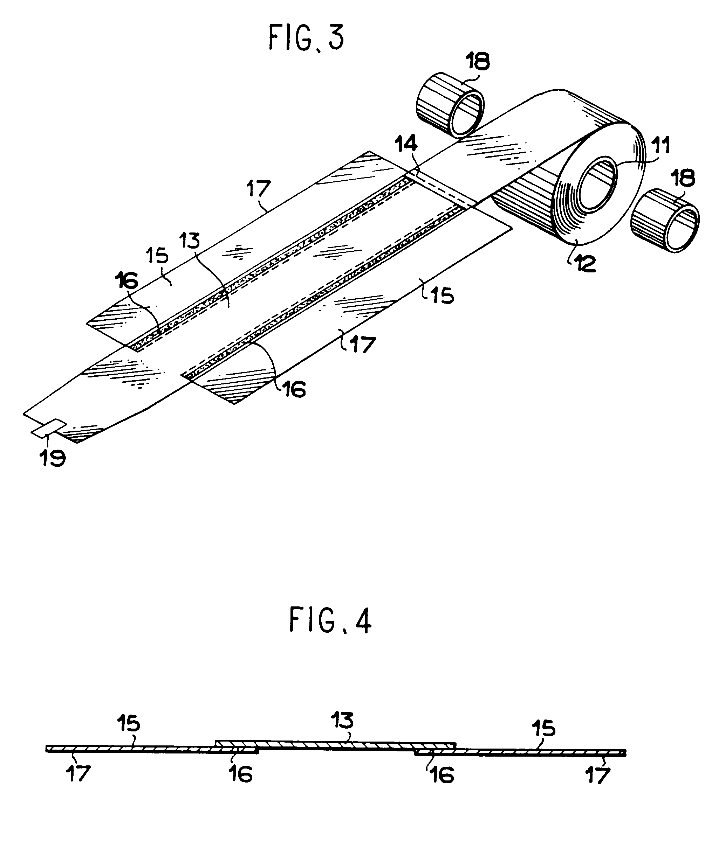

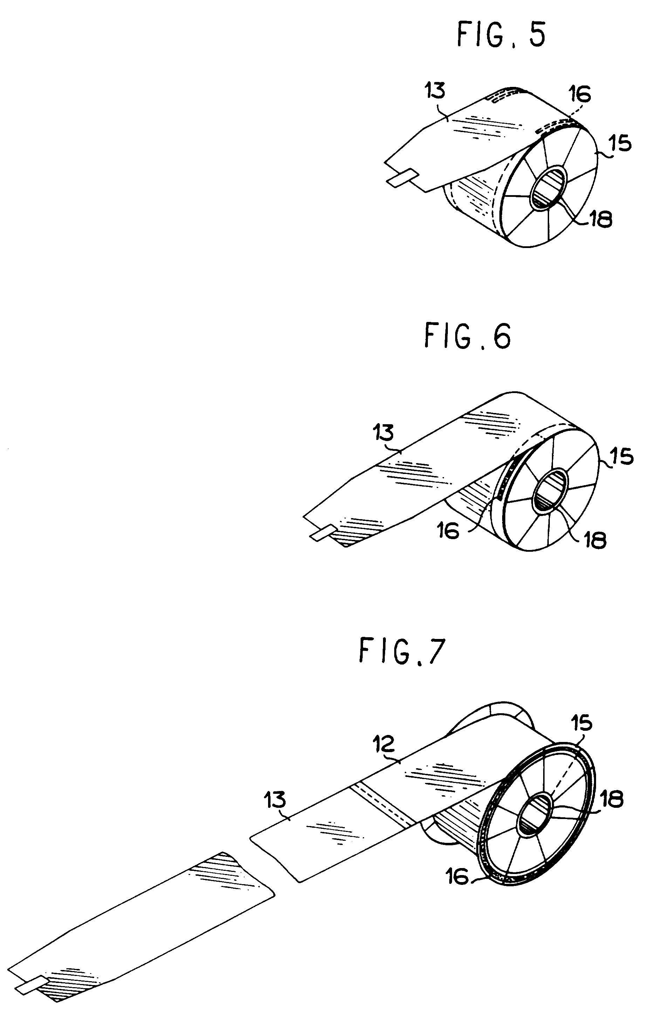

Figure 1 is a perspective view of an embodiment of the package of a photosensitive strip material of the invention partially broken away. Figure 2 is a sectional view, Figure 3 is an exploded perspective view, and Figure 4 is a sectional view of a light-shielding leader thereof, respectively. Figures 5 to 7 are perspective views illustrating the state of extending the photosensitive strip material.

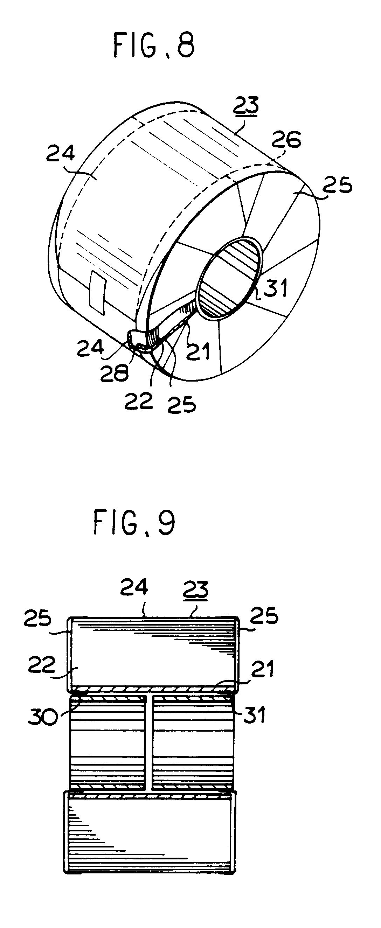

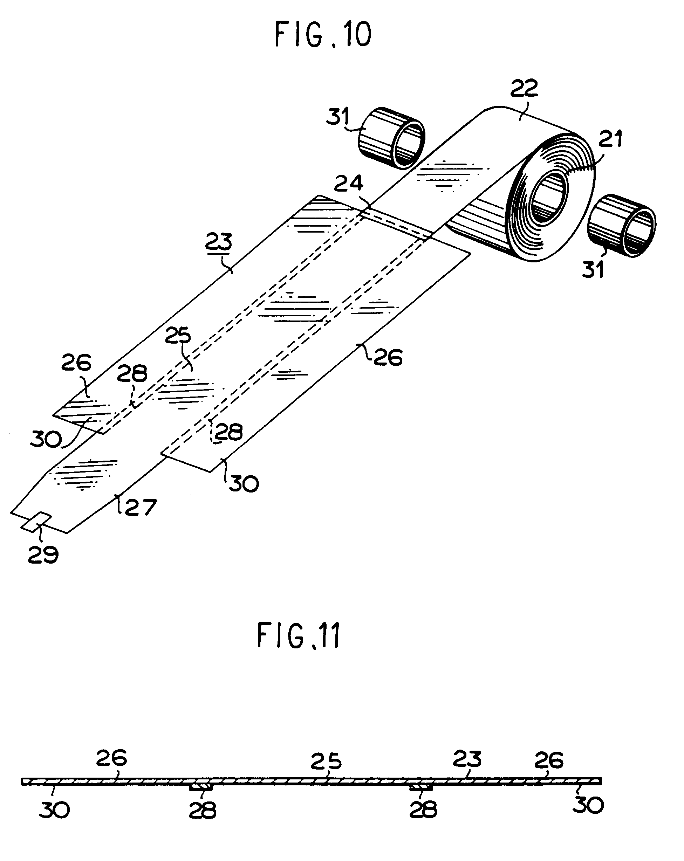

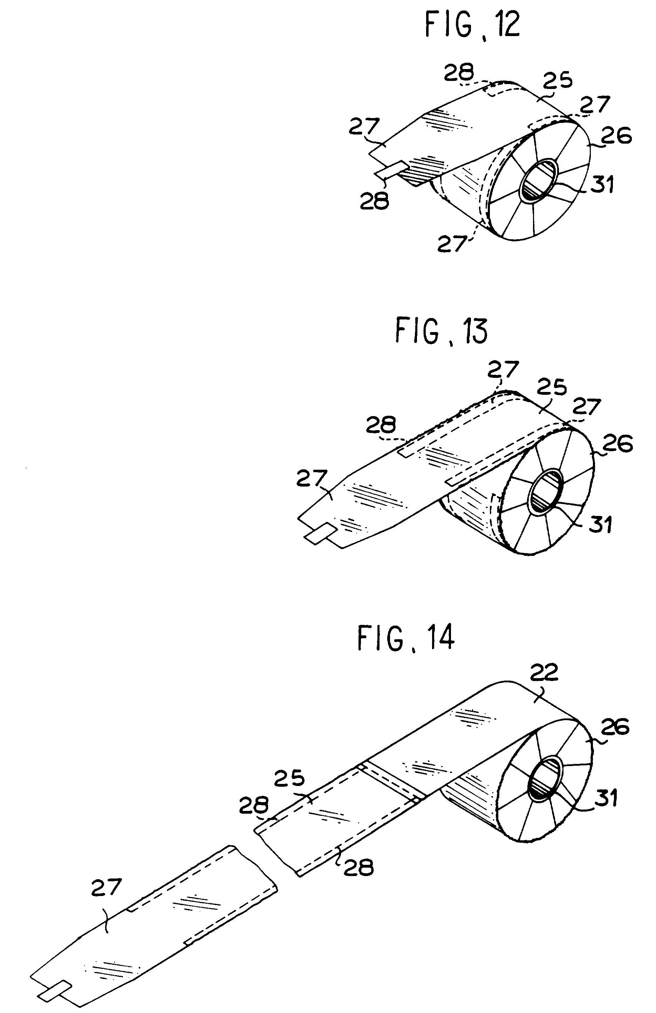

Figure 8 is a perspective view of another embodiment of the package of a photosensitive strip material of the invention partially broken away. Figure 9 is a sectional view, Figure 10 is an exploded perspective view, and Figure 11 is a sectional view of a integrated light-shielding paper thereof, respectively. Figures 12 to 14 are perspective views illustrating the state of extending the photosensitive strip material.

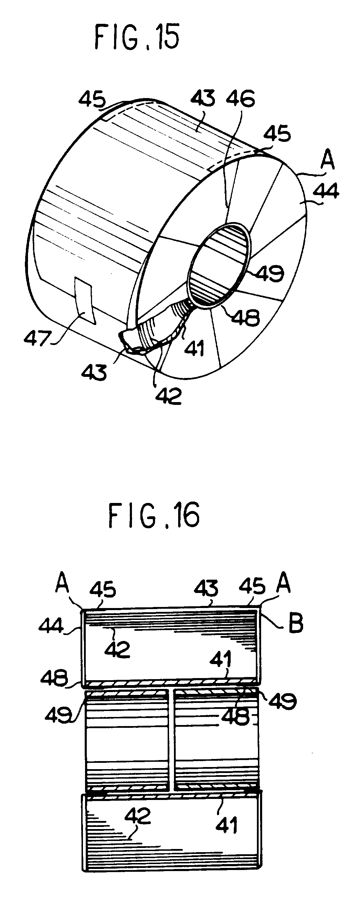

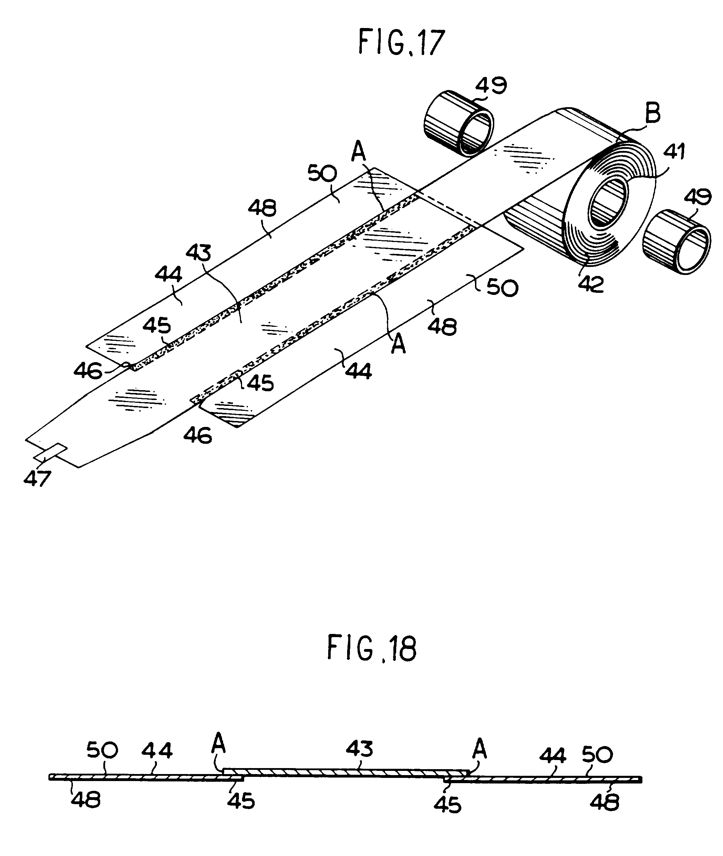

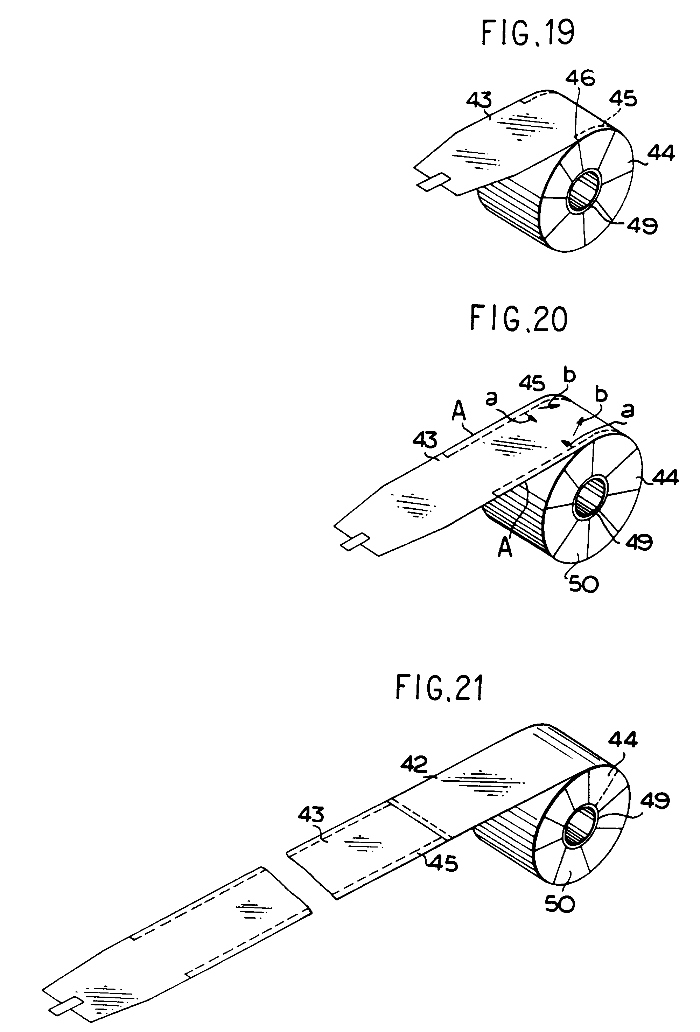

Figure 15 is a perspective view of another embodiment of the package of a photosensitive strip material of the invention partially broken away. Figure 16 is a sectional view, Figure 17 is an exploded perspective view, and Figure 18 is a sectional view of a light-shielding paper thereof, respectively. Figures 19 to 21 are perspective views illustrating the state of extending the photosensitive strip material.

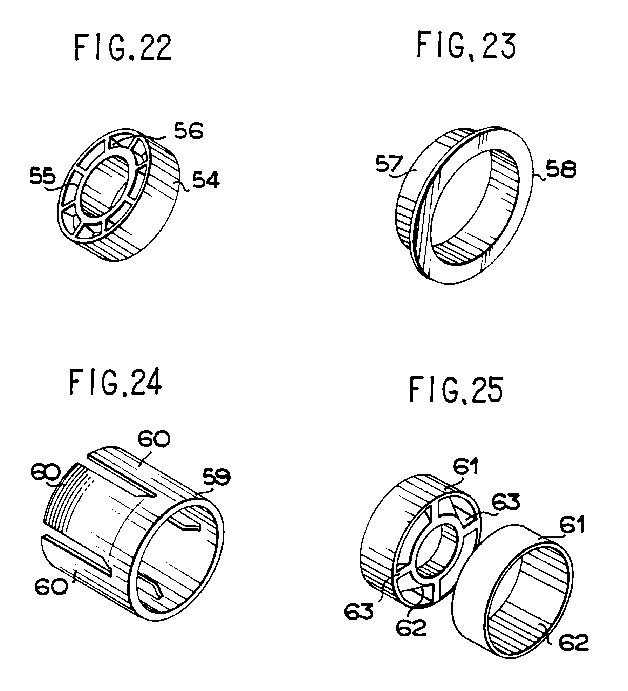

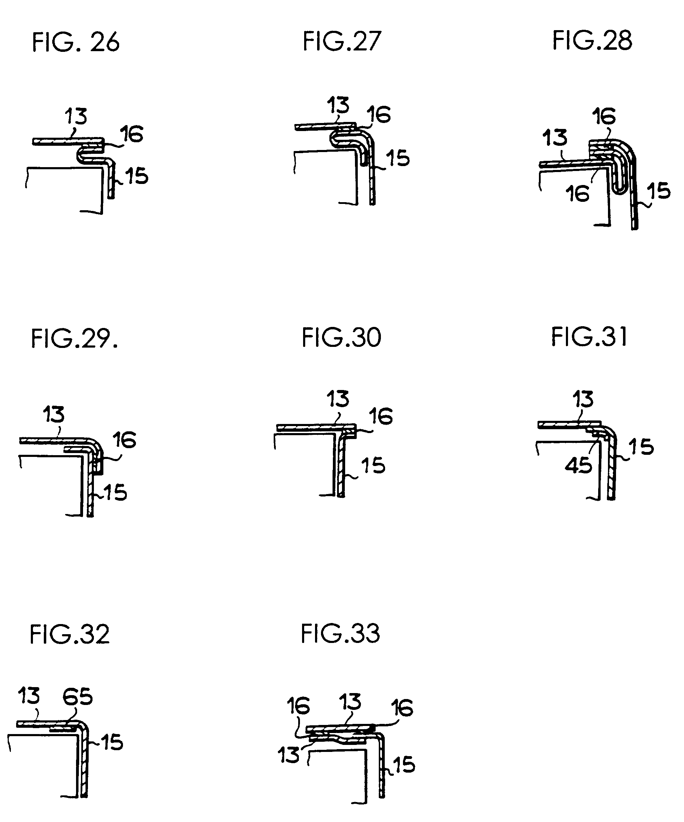

Figures 22 to 25 are perspective views of other examples of the fixing member to fix the end portion except a paper core, and Figures 26 to 33 are sectional views illustrating an joining form of a light-shielding leader to a light-shielding cover.

Figure 34 is an exploded perspective view of a conventional package.

### DETAILED DESCRIPTION OF THE INVENTION

In an embodiment of the package of the invention like shown in Figure 1, light-shielding cover is adhered to the light-shielding leader in peelable state therefrom at the time of a extending it, and the adhesion method may be any method capable of forming such an adhesive strength such as heat sealing, ultra sonic adhesion or the adhesion using an adhesive.

The light-shielding leader shields mainly the circumferential surface of the rolled photosensitive material from light, and the light-shielding cover shields mainly the side surface of the rolled photosensitive material. The boundary (edge) between the circumferential surface and the side surface is shielded by the light-shielding leader and/or the light-shielding cover corresponding to the embodiment of adhesion. At that time, in order to increase light-shielding ability of the boundary portion, it is prefered that the boundary portion is multipled by folding at least one of the light-shielding leader or the light-shielding cover or doubling the light-shielding leader.

The light-shielding leader and the light-shielding cover need to have light-shielding ability, moistureproofness and physical strength which do not affect the photosensitive material adversely, and they may be made of various films such as a polyethylene film containing a light-shielding material such as carbon black. The light-shielding leader and the light-shielding cover may be made of the same material.

In another embodiment of the package of the invention like shown in Figure 8, the integrated light-shielding cover is made of a tearable material such as a paper, a stretched film containing carbon black, including the same materials as the light-shielding leader and the side light-shielding cover described later. The side edge of the cutting means need substantially to conform to the boundary between the curcumferential surface portion and the side surface portion. Two cutting means is provided at both sides of the boundary or one cutting mean is provided all around the circumferential surface portion.

In another embodiment of the package of the invention like shown in Figure 15, the side light-shielding cover is adhered to both sides of the light-shielding leader, and the outside adhesion boundary substantially conforms to the boundary between the circumferential surface and the side surface of the rolled photosensitive material. At least the side light-shielding cover is made of a tearable material in the boundary direction. The light-shielding cover should be torn along the outside adhesion boundary, since the adhesion portion has a great physical strength while a force pulling inside in addition to a shearing force acts when the light-shielding leader is pulled. The light-shielding leader should be joined to the upper side of the side light-shielding cover in order to use the great strength of the adhesion portion effectively. If the adhesion boundary lies on the circumferential surface of the photosensitive strip material, a part of the side light-shielding cover is projected from the circumferential surface after extending the light-shielding leader. To the contrary, when the adhesion boundary lies on the side surface, the force extending the light-shielding leader does not act as the tearing force the side light-shielding cover along the adhesion boundary effectively. As a result, the force for extending comes to be great, or the side light-shielding cover can not be torn. Therefore, the adhesion boundary should lie on the boundary between the circumferential surface and the side surface.

The light-shielding leader and the side light-shielding cover are joined together by using any method capable of obtaining a sufficient adhesive strength such as heat sealing or ultra sonic adhesion.

The light-shielding leader and the side light-shielding cover may be made of various films having light-shielding ability, moistureproofness and physical strength which do not affect the photosensitive strip material adversely, and having tearability in one direction. Such a film includes unstretched films and molecular oriented films such as uniaxially molecular oriented thermoplastic resin films, unstretched thermoplastic resin inflation films having a small blow up ratio. Moreover, the light-shielding leader and the side light-shielding cover may be composed of a single layer film or a multilayer film.

The light-shielding leader and the side light-shielding cover are usually made of a thermoplastic resin. A preferable resin contains less volatile components which affect a photographic photosensitive material adversely, and is flexible so as to make the package easily, even if a light-shielding material is contained. Moreover, the physical strength is great, and the film forming is easy. The resin can be joined to the photosensitive strip material by heat sealing, ultra sonic adhesion, high-frequency adhesion or the like without using an adhesive tape, and the cost is low. The light-shielding leader and the side light-shielding cover made of thermoplastic resin is composed of, for example, a composition containing 30 to 90 wt. % of homopolyethylene resin and/or ethylene-α-olefin copolymer resin having 0.1 to 15.0 g/10 minutes of a melt index and 0.940 to 0.970 g/cm³ of a density, or a composition containing 9 to 69 wt. % of ethylene-α-olefin copolymer resin and/or homopolyethylene resin having 0.1 to 50 g/10 minutes and 0.870 to 0.940 g/cm³ of a density. Moreover, ethylene copolymer resin described below may be used.

When the light-shielding leader and the side light-shielding cover are formed of a multilayer film it is preferred to provide a molecular oriented film layer for tearing easily and further to provide a film layer composed of one or more resins selected from homopolyethylene resin, ethylene-α-olefin copolymer resin, propylene-α-olefin copolymer resin and ethylene copolymer resins described below, having a thickness less than 70 % of the total thickness for preventing the occurence of pinholes and breackage.

Representative examples of the ethylene copolymer resins are described below.

Ethylene-vinyl acetate copolymer resin, ethylenepropylene copolymer resin, ethylene-1-butene copolymer resin, ethylene-butadiene copolymer resin, ethylene-vinyl chloride copolymer resin, ethylene-methyl methacrylate copolymer resin, ethylene-methyl acrylate copolymer resin, ethylene-ethyl acrylate copolymer resin (EEA), ethylene-acrylonitrile copolymer resin, ethylene-acrylic acid copolymer resin, ionomer resins (copolymer resins of ethylene and unsaturated acid which is crosslinked with metal such as zinc), ethylene-α-olefin copolymer resin (L-LDPE resin), ethylene-propylene-butene-ternary copolymer resin, modified polyolefin resins.

Among the ethylene copolymer resins, L-LDPE resin and EEA resin are preferred, because they are excellent in film moldability, heat sealability and dispersion of colored material and great in bag breakage strength, impact puncture strength and tear strength.

The linear low density polyethylene (L-LDPE) resin is called third polyethylene resin, and it is a low cost high strength resin, having the advantages of both low, medium-density polyethylene resin and high-density polyethylene resin, which meets the requirements, i.e. resource conservation and energy conservation, of the times. The L-LDPE resin is a copolymer of ethylene and α-olefin, and it has a linear structure having short branches. The number of carbon atoms of the α-olefin is 3 to 13. Preferable α-olefin has a number of carbon atoms of 4 to 10, and examples of the α-olefin are butene-1, 4-methylpentene-1, hexene-1, heptene-1 and octene-1. The density is usually in the range of 0.87 to 0.95 g/cm³. Most of the L-LDPE resin is synthesized by low pressure method, and partly synthesized by modified high pressure method.

Preferable L-LDPE resins have 0.5 to 15 g/10 minutes (ASTM D-1238) of a melt index (MI) and 0.870 to 0.945 g/cm³ (ASTM D-1505) of a density. The number of carbon atoms α-olefin is 6 to 8, and produced by the liquid process or the vapor process in view of physical strength and heat seal strength. Preferable examples of commercial L-LDPE resin are "Ultzex" (Mitsui Petrochemical Industries), "Stamilex" (DSM), "Dowlex" (Dow Chemical), "TUFLIN" (UCC) and "TUFTHENE" (Nippon Unicar).

A light-shielding material is blended, or a light-shielding film such as a metal foil, metallized film or a light-shielding paper is laminated, in order to add the light-shilding ability to the light-shielding leader and the light-shielding cover. Example of the light-shielding materials are described below.

### Inorganic Compounds:

Oxides ... Silica, diatomaceous earth, alumina, titanium oxide, iron oxide, zinc oxide, magnesium oxide, antimony oxide, barium ferrite, strontium ferrite, berylium oxide, pumice, pumice balloon, alumina fiber, etc.
Hydroxides ... aluminum hydroxides, magnesium hydroxides, basic magnesium carbonate, etc.
Carbonates ... calcium carbonate, magnesium carbonate, dolomite, dawsonite, etc.
Sulfates, sulfites ... calcium sulfate, barium sulfate, ammonium sulfate, calcium sulfite, etc.
Silicates ... talc, caly, mica, asbestos, glass fiber, glass baloon, glass bead, calcium silicate, montomorillonite, bentonite, etc.
Carbons ... carbon black, graphite, carbon fiber, carbon hollow bead, etc.
Others ... iron powder, copper powder, lead powder, tin powder, stainless steel powder, pearl pigment, aluminum powder, aluminum flakes molybdenum sulfide, boron fiber, silicon carbide fiber, aluminum fiber, stainless steel fiber, nickel fiber, brass fiber, potassium titanate, lead titanate zirconate, zinc borate, barium metaborate, calcium borate, sodium borate, aluminum paste, etc.
steel fiber, nickel fiber, brass fiber, potassium titanate, lead titanate zirconate, zinc borate, barium metaborate, calcium borate, sodium borate, aluminum paste, etc.

### Organic Compounds:

wood flour such as pine, oak and sawdust, husk fiber such as almond, peanut and chaff, colored various fibers such as cotton, jute, paper piece, cellophane piece, nylon fiber, polypropylene fiber, starch, aromatic polyamide fiber, etc.

Among them, preferred light-shielding materials make opaque, and light-absorptive carbon black, titanium nitride and graphite are particularly peferred because of being excellent in heat resistance and light resistance and being relatively inactive.

Carbon blacks are divided into gas black, oil furnace black, channel black, anthracene black, acetylene black, Ketchen carbon black, thermal black, lamp black, vegetable black and animal black according to their origin. Among these, furnace carbon black is preferable in terms of light-shielding character, cost and improvement of properties. On the other hand, since acetylene black and Ketschen carbon black have an antistatic character, they are also preferable, though they are expensive. They may be blended to the furnace black in order to improve its character.

The blending form of the light-sheilding material roughly divided as follows:
Uniformly colored pellet:
   Color compound.
Powder dispersion:
   Dry color, treated with various surface-treating agents and ground with dispersion assistant to fine granules.
Paste:
   Light-shielding material is dispersed into a plasticizer or the like.
Liquid:
   Liquid color, which is liquid composed of a light-shielding material dispersed in a surfactant.
Masterbatch pellet:
   Light-shielding material dispersed in a plastic resin to be colored in a high concentration.
Lubricative granule, powder:
   Light-shielding material dispersed in a plastic resin in high concentration, and formed in granule or powder form.
Dry powder:
   Usual powder without treatment.

As the form of the light-shielding material, there are powder coloring agent, paste coloring agent, wet coloring agent, masterbatch pellets, dye, colored pellets, etc. Though, there are various blending method, the masterbatch method is preferred in view of cost and the contamination of the working place. Japanese Patent KOKOKU No. 40-26196 discloses a method of making a masterbatch of polymer-carbon black by dissolving the polymer in an organic solvent and dispersing the carbon black into the solution. Japanese Patent KOKOKU No. 43-10362 discloses another method of making a masterbatch by dispersing the carbon black into polyethylene. Particularly preferable carbon black for the packaging material for photographic photosensitive materials is the oil furnace carbon black having a pH of 6 to 9, a mean particle size of 10 to 120 mu, a volatile components content of less than 2 % and an oil absorption value of more than 50 ml/100 g in view of rare occurrence of photosensitivity deviation, great light-shielding ability and rare occurrence of lumps of carbon black and fish eyes.

An antistatic agent and a conductive material may be added in the light-shielding leader and the light-shielding side cover in order to prevent the occurrence of static marks or the like. Representative examples of the antistatic agent and the conductive material are described below.

Nonionic surfactants (representative component is a polyoxyethylene glycol), anion surfactants (representative component is a polyoxyethylene glycol), cationic surfactants (representative component is a quarternary ammonium salt), amphoteric surfactants, alkyl amine derivatives, various lubricants, carbon black, graphite, metal surface-coating pigments metal powders, metal flakes, carbon fiber, metal fibers, whiskers (porassium titanate, aluminum nitride, alumina).

Representative examples of the nonionic surfactant are described below. Polyethylene glycol fatty acid esters, polyoxyethylene sorbitan fatty acid esters, polyoxyethylene fatty alcohol ethers, polyoxyethylene alkyl phenyl ethers, polyoxyethylene glycerine fatty esters, polyoxyethylene fatty amines, sorbitan mono-fatty acid ester, fatty acid pentaerythritols, ethylene oxide adducts of fatty alcohols ethylene oxide adducts of fatty acids, fatty amino or fatty amide ethylene oxide adducts, alkyl phenol ethyene oxide adducts, alkyl naphthol ethylene oxide adducts, partially fatty acid-esterified polyol ethylene oxid adducts, various nonionic antistatic agents disclosed on page 2 of Japanese Patent KOKOKU No. 63-26697.

Representative examples of the anionic surfactant are described below. Sodium ricinoleic acid sulfate ester, various fatty acid metal salts, sodium ricinoleate ester sulfate ester, sulfated oleic acid ethylaniline, olefin sulfate ester salts, oleyl alcohol sulfate ester sodium salt, alkyl sulfate ester salts, fatty acid ethylsulfonates, alkyl sulfonates, alkylnaphthalene sulfonates, alkylbenzene sulfonates, succinate ester sulfonates, phosphate esters.

Representative examples of the cationic surfactant are described below. Primary amine salts, tertiary amine salts, quarternary ammonium salts, pyridine derivatives.

Representative examples of the ampholytic surfactant are described below. Carboxylic acid derivatives, imidazoline derivatives, betaine derivatives.

To add an antioxidant to the light-shielding leader or the side light-shielding cover is preferred in order to prevent occuring lumps of carbon black and fish eyes. Suitable antioxidants are described below.

### Phenol Antioxidants:

6-t-butyl-3-methylphenol derivatives, 2,6-di-t-butyl-p-cresol, 2,2'-methylenebis-(4-methyl-6-t-butylphenol),
2,2'-methylenebis-(4-ethyl-6-t-butylphenol),
4,4'-butylidenebis(6-t-butyl-m-cresol),
4,4'-thiobis(6-t-butyl-m-cresol), 4,4-dihydroxydiphenylcyclohexane, alkyl group-induced bisphenol, styrene group-induced phenol,
2,6-di-t-butyl-4-methylphenol, n-octadecyl-3-(3',5'-di-t-butyl-4'-hydroxyphenyl)propionate,
2,2'-methylenebis(4-methyl-6-t-butylphenol),
4,4'-thiobis(3-methyl-6-t-butylphenol),
4,4'-buthylidenebis(3-methyl-6-t-butylphenol),
stearyl-β-(3,5-di-4-butyl-4-hydroxyphenyl)propionate,
1,1,3-tris(2-methyl-4-hydroxy-5-t-butylphenyl)butane,
1,3,5-trimethyl-2,4,6-tris(3,5-di-t-butyl-4-hydroxybenzyl)benzene, tetrakis[methylene-3(3',5'-di-t-butyl-4'-hydroxyphenyl)propionate] methane, etc.

### Ketone-Amine Condense Antioxidants:

6-ethoxy-2,2,4-trimethyl-1,2-dihydroquinoline, polymers of 2,2,4-trimethyl-1,2-dihydroquinoline,
trimethyldihydroquinoline derivatives, etc.

### Arylamine Antioxidants:

Phenyl-α-naphthylamine, N-phenyl-β-naphthylamine,
N-phenyl-N'-isopropyl-p-phenylenediamine, N,N'-diphenyl-p-phenylenediamine, N,N'-di-β-naphtyl-p-phenylenediamine, N-(3'-hydroxybuylidene)-1-naphtylamine, etc.

### Imidazole Antixodants:

2-mercaptobenzolimidazole, zinc salt of 2-mercaptobenzoimidazole,
2-mercaptiomethylbenzoimidazole, etc.

### Phosphite Antioxidants:

Alkyl-induced arylphosphite, diphenylisodecyphosphite,
sodium phosphite salt of tris(nonylphenyl)phosphite,
trinonylphenylphosphite, triphenylphosphite, etc.

### Thiourea Antioxidants:

Thiourea derivatives, 1,3-bis(dimethylaminopropyl)-2-thiourea, etc.

### Other Antioxidants:

Those useful for air oxidation, such as dilauryl thiodipropionate, etc.

Preferable antioxidants are phenol antioxidants, and particularly effective antioxidants are BHT, low volatile high molecular weight phenol antioxidants ("Irganox 1010", "Irganox 1076", trade names of Ciba-Geigy A.G., "Topanol CA", trade name of I.C.I., etc.).

A suitable content of the antioxidant is 0.01 to 1.0 wt. %.

To add a lubriant to the light-shielding leader or the light-shielding cover is preferred. Suitable lubricants are described below.

### Oleic acid amide lubricants:

"ARMOSLIP-CP" (Lion Akzo Co., Ltd.), "NEWTRON" and "NEWTRON E-18" (Nippon Fine Chemical Co., Ltd.),
"AMIDE-O" (Nitto Kagaku K.K.), "DIAMID 0-200" and "DIAMID G-200" (Nippon Kasei Chemical Co., Ltd.),
"ALFLOW E-10" (Nippon Oil and Fats Co., Ltd.), etc.

### Erucic acid amide lubricants:

"ALFLOW S-10" (Nippon Oil and Fats Co., Ltd.), etc.

### Stearic acid amide lubricants:

"ALFLOW S-10" (Nippon Oil and Fats Co., Ltd.), "NEWTRON 2" (Nippon Fine Chemical Co., Ltd.), "DIAMID 200 BIS" (Nippon Kesei Chemical Co., Ltd.), etc.

### Bis fatty acid amide lubricants:

"BISAMIDE" (Nitto Kagaku K.K.), "DIAMID-200 BIS" (Nippon Kasei Chemical Co., Ltd.), "ARMOWAX-EBS" (Lion Akzo Co., Ltd.), etc.

### Silicone lubricants:

dimethylpolysiloxanes, etc. (Sinetsu Chemical Co., Ltd., Toray Silicone Co., Ltd.), etc.

### Alkyl amine lubricants:

"ELECTROSTRIPPER TS-2", "ELECTROSTRIPPER TS-3" and "ELECTROSTRIPPER TS-5" (Kao Corp.), etc.

### Palmitic amide lubricants:

### Behenic amide lubricants:

BNT (Nippon Fine Chemical Co., Ltd.)

### Methylenebis steroid amide lubricants:

Among them, higher fatty amides such as a saturated straight chain fatty amide or unsaturated mono fatty amide of C₈ to C₂₂ is particularly preferred because of being cheap and having a great lubrication ability, and no occurrence of fogging photosensitivity deviation in photographic photosensitive materials.

### Hydrocarbon lubricants:

liquid paraffin, natural paraffin, microwax, synthetic paraffin, polyethylene wax, polypropylene wax,
chlorinated hydrocatbon, fluorocarbon, etc.

### Fatty acid lubricants:

higher fatty acids preferably more than C₁₂, hydroxy fatty acids, etc.

### Ester lubricants:

fatty acid lower alcohol esters, fatty acid polyol esters, fatty acid polyglycol esters, fatty acid fatty alcohol esters, etc.

### Alcohol lubricants:

polyols, polyglycols, polyglycerols, etc.

### Metallic soap:

metal salts such as Li, Mg, Ca, sr, Ba, Zn, Cd, Al, Sn, Pb salts of higher fatty acids such as lauric acid, stearic acid, ricinoleic acid, naphthenic acid, oleic acid, etc.

Suitable content of the lubricant is 0.005 to 5.0 wt. %, paricularly in the case of using fatty amide lubricant which has a great lubrication ability and is liable to bleed out, the content is preferably 0.005 to 1.0 wt. %.

An antiblocking agent may be added to the light-shielding leader or the light-shielding side cover in order to prevent blocking. Suitable antiblocking agents are described below.

Silica, diatomaceous earth, talc, calcium silicate, aluminum silicate, magnesium silicate, calcium carbonate, polyvinyl esters of higher fatty acid, n-octadecylurea, dicalboxylic acid ester amides and N,N'-dioleylhydroxyamide, and various lubricants and light-shielding materials having antiblocking activity. Carbon black, fatty acid amide, silica, talc, calcium carbonate, metal powder, titanium dioxide and the like are particularly preferable. A preferred amount of the antiblocking agent is 0.01 to 7.0 wt. %.

Various additives may be added to the light-shielding leader or the light-shielding cover of the invention.

Examples of the additives are described below.
(1) Plasticizer;
   phthalic acid esters, glycol esters, fatty acid esters, phosphoric acid esters, etc.
(2) Stabilizer;
   lead compounds, cadmium compounds, zonc compounds, alkaline earth metal compounds, organic tin compounds, etc.
(3) Flame retardant;
   phosphoric acid esters, phosphiric acid ester halides, halides, inorganic materials, polyols containing phosphor, etc.
(4) Filler;
   alumina, kaolin, clay, calcium carbonate, mica, talc, titanium dioxide, silica, etc.
(5) Reinforcing agent;
   glass lobing, metallic fiber, glass fiber, glass milled fiber, carbon fiber, etc.
(6) Blowing agent;
   inorganic blowing agents (ammonium carbonate, sodium hydrogen carbonate), organic blowing agents (nitroso compounds, azo compounds), etc.
(7) Vulcanizing agent;
   vulcanization accelerator, acceleration assistant, etc.
(8) Deterioration preventing agent;
   ultraviolet absorber, antioxidant, metal deactivator, peroxide decomposing agent, etc.
(9) Coupling agent;
   ailane compounds, titanium compounds, chromium compounds, aluminum compounds, etc.
(10) Nucleating agent;
   organic nucleating agents (dibenzylidene sorbitol compounds, etc.), inorganic nucleating agents (calcium carbonate, etc.)
(11) Various thermoplastic resins, rubbers, etc.

Representative examples of the means for easily tearing the light-shielding leader and the light-shielding side cover are described below.

### A: Single layer light-shielding thermoplastic resin film

### Representative Means 1

A film of 50 to 200 µm in thickness containing 20 to 95 wt. % of polyethylene resin (containing ethylene-α-olefin copolymer resin in addition to homopolyethylene resin) having 0.1 to 15. 0 g/10 minutes of a melt index and 0.941 to 0.970 g/cm³ of a density, 0.5 to 10 wt. % of a granular light-shielding material, 5 to 80 wt. % of homopolyethylene resin having 0.1 to 5.0 g/10 minutes and 0.870 to 0.940 g/cm³ of a density, a lubricant and/or an antistatic agent.

### Representative Means 2

A film of 50 to 200 µm in thickness containing 20 to 95 wt. % of polyethylene resin (containing ethylene-α-olefin copolymer resin in addition to homopolyethylene resin) having 0.1 to 15.0 g/10 minutes of a melt index and 0.941 to 0.970 g/cm³ of a density, 0.5 to 10 wt. % of a guranular light-shielding material, 5 to 80 wt. % of an ethylene-α-olefin copolymer resin having 5 to 50 g/10 minutes of a melt index and 0.870 to 0.940 g/cm³ of a density, a lubricant and/or an antistatic agent.

### B: Multilayer coextruded light-shielding thermoplastic film.

### Representative Means 3

A multilayer coextruded film of 30 to 200 µm in thickness of which more than 30 % is a molecular oriented polyethylene resin containing more than 50 wt. %, preferably more than 70 wt. %, particularly preferably more than 90 wt. %, of homopolyethylene resin and/or an ethylene-α-olefine copolymer resin having 0.1 to 15.0 g/10 minutes of a melt index and 0.941 to 0.970 g/cm³ of a density, having at least one layer containing a light-shielding material.

### Representative Means 4

A multilayer coextruded film of 30 to 200 µm in thickness wherein the layer shown in Representative Means 1 or 2 is more than 50 % of the whole thickness. C: Film wherein a flexible sheet is laminated to an uniaxially molecular oriented thermoplastic resin film.

### Representative Means 5

A film wherein a thermoplastic resin layer containing a conductive carbon black or a furnace carbon black, an antistatic agent and/or a conductive material is coated onto at least one side of an uniacially molecullar oriented (including uniaxially stretched) thermoplastic resin film.

### Representative Means 6

A film wherein a light-shielding thermoplastic resin film is laminated onto at least one side of an uniaxially molecular oriented (includes uniaxially stretched) thermoplastic resin film through an adhesive layer.

### Representative Means 7

An uniaxially stretched (longitudinally or laterally) thermoplastic resin film containing a light-shielding material.

### Representative Means 8

An uniaxially stretched (longitudinally or laterally) multilayer coextruded thermoplastic resin film containing a light-shielding material in at least one layer.

### Representative Means 9

A thermoplastic resin film comprising a metallized film.

### Representative Means 10

A film wherein a thermoplastic resin film or a thermoplastic resin coating layer is laminated onto the film shown in Representative Means 9 through an adhesive layer or directly.

### Representative Means 11

A film wherein a thermoplastic resin film (an uniaxially molecular orientated film, a biaxial molecule orientation film or an unstretched film) containing a light-shielding material and/or a light-shielding paper is laminated onto a metallized uniaxially molecular orientated (longitudinally or laterally, including stretched) thermoplastic resin film through an adhesive layer.

A means for tearing easily is preferably provided around the boundary of the adhesive portion of the light-shielding leader or of the light-shielding side cover in order to tear easily along the boundary of the adhesive portion.

The means for tearing easily are, for example, a V-shape notch, a large number of very narrow notches, many indentations, perforations having a depth less than a half of the light-shielding film thickness, melting by laser beam, cutting, adhesion of a single face adhesive tape, streaks over the whole surface of the light-shielding film in the coiling direction, and the like.

The core and the photosensitive strip material may be conventional.

In an embodiment of the package of the invention like shown in Figure 1, the photosensitive strip material is packaged by the light-shielding leader and the light-shielding cover being integrated, and the light-shielding leader is readily separated from the light-shielding cover at the time of extending the photosensitive strip material.

In another embodiment of the package of the invention like shown in Figure 8, the photosensitive strip material is packaged by the integrated light-shielding cover to be shielded from light, and it is cut along the cutting member at the time of extending the photosensitive strip material to be separated into the circumferential light-shielding portion and leader portion and the side light-shielding portion.

In still another embodiment of the package of the invention like shown in Figure 15, the photosensitive strip material is packaged by the integrated light-shielding leader and side light-shielding cover to be shielded from light, and at the time of extending the photosensitive strip material, the light-shielding leader or the side light-shielding cover is torn along the adhesion boundary between the light-shielding leader and the light-shielding cover.

### EXAMPLES

An embodiment of the package of a rolled photosensitive material is shown in Fig. 1 to 7.

In Fig. 1 to 4, the numeral 11 indicates a core having a light-shielding ability, a photosensitive strip material 12 of 11.7 cm x 90 m is wound around the core 11 and the roll of the photosensitive strip material is 76 mm in inner diameter and 185 mm in outer diameter. A light-shielding leader 13 made of a low density polyethylene resin containing 3 wt. % of a carbon black, and having 100 um in thickness and a size of 11.7 cm x 90 cm is connected with the end of the photosensitive strip material by using an adhesive tape 14. A pair of light-shielding covers 15 made of the same material as the light-shielding leader 13, and having 100 µm in thickness and a size of 11.7 cm x 90 cm are connected with both sides of the leader 13 in a peelable state, and the overlapping portion of the leader 13 with the cover 15 is 20 mm in width and a heat sealing portion 16 at the center of the overlapping portion is 10 mm in width.

The light-shielding leader 13 is wound more than one time around the roll of the photosensitive strip material 12 and fixed with an end tape 19. The light-shielding cover 15 covers the side surface of the roll of the photosensitive strip material 12 and the edge portion 17 thereof is folded inside the core 11. Two paper cores 18 having 75 mm in outer diameter, 2 mm in thickness and 58 mm in width are inserted into the core 11 on both sides with pressure, and the edge part 17 of the light-shielding cover 15 is fixed between the core 11 and the fixing members 18.

The extending action of the photosensitive strip material from a magazine is described below. When the package is loaded in a magazine (not illustrated), as shown in Fig. 5, the end of the light-shielding leader 13 is pulled to extend from the slit of the magazine. In the above state, when the light-shielding leader 13 is pulled, as shown in Fig. 6, the light-shielding leader 13 is peeled from the light-shielding cover 15 and pulled out from the slit. While, the light-shielding cover 15 remains on the side of the photographic strip material.

The light-shielding leader 13 is further pulled to be completely out of the magazine, as shown in Fig. 7, and the light-shielding leader 13 is completely peeled from the light-shielding cover 15 and completely separated from it. As a result, a load to the rotation of the roll of the photosensitive strip material is reduced.

Another embodiment of the package of a photosensitive strip material is shown in Fig. 8 to 14.

In Fig. 8 to 11, the numeral 21 indicates a core having a light-shielding ability, a photosensitive strip material 22 of 11.7 cm x 90 m is wound around the core 21 and the roll of the photosensitive strip material is 76 mm in inner diameter and 185 mm in outer diameter. An integrated light-shielding cover 23 is connected with the end of the photosensitive strip material 21 by an adhesive tape 24. The integrated light-shielding cover 23 is composed of a rectangularly circumferential light-shielding portion 25, pair of side light-shielding portions 26 integrated with both sides of the circumferential light-shielding portion 25 and an end portion 27 projected from the circumferential light-shielding portion 25, and having 80 µm in thickness. Cutting members 28 composed of a polyethylene terephthalate film having 100 µm in thickness and a size of 10 mm x 70 cm are adhered at both side of the inner surface of the circumferential light-shielding portion 25, and the outer side edge of the cutting members 28 are the same as the boundary of the circumferential light-shielding portion and the side light-shielding portion. The circumferential light-shielding portion 25 is coiled one or more times around the roll of the photosensitive strip material 22 and the end portion 27 thereof is fixed by an end tape 29. The side light-shielding portions are folded to be covered on the side surface, and the end portion 30 thereof is folded inside the core 21. Two fixing members 31 are inserted into the core 21 in both sides with pressure, and the edge portion 30 of the side light-shielding portion 26 is fixed between the core 21 and the fixed member 31.

The extending action of the photosensitive strip material is described below. When the package is loaded in a magazine (not illustrated), as shown in Fig. 12, the end portin 27 of the integrated light-shielding cover 23 is pulled to extend from the slit of the magazine. In the above state, when the end portion 27 is pulled, as shown in Fig. 13, the integrated light-shielding cover 23 is torn along the side of the cutting members 28, i.e. the boundary between the circumferential light-shielding portion 25 and the side light-shielding portion 26. As a result, the circumferential light-shielding portion 25 can be pulled out of the magazine, while the side light-shielding portion 26 remains on the side of the photosensitive strip material 22.

When the end portion 27 is further pulled to be completely out of the magazine, as shown in Fig. 14, the circumferential light-shielding portion 25 is torn and completely separated from the side light-shielding portion 26. As a result, a load to the rotation of the roll of the photosensitive strip material is reduced.

Still another embodiment of the package of a photosensitive strip material is shown in Fig. 15 to 21.

In Fig. 15 to 18, the numeral 41 indiates a core having a light-shielding ability, a photosensitive strip material 42 of 11.7 cm x 90 m is wound around the core 41 and the roll of the photosensitive strip maerial 42 is 76 mm in inner diameter and 185 mm in outer diameter. A light-shielding leader 43 made of a low density polyethylene resin containing 3 wt. % of carbon black, and having 100 um in thickness and a size of 11.7 cm x 90 cm is adhered to the end of the photosensitive strip material 42. A light-shielding cover 44 composed of a high density polyethylene resin film and having 100 µm in thickness a size of 10.0 cm x 70 cm are adhered onto both sides of the light-shielding leader 43. The adhered heat sealed portion 45 is 10 mm in width. A notch 46 is formed at about an outer side edge of the heat sealed portion 45 in the end of the side light-shielding cover 44.

The light-shielding leader 43 is wound once or more around the photosensitive strip material 42 and fixed with an end tape 47. The side light-shielding cover 44 is covered on the side surface of the roll of the photosensitive strip material 42 and the edge portion 48 thereof is folded inside the core 41. At that time, the adhesion boundary A of the light-shielding leader 42 and the side light-shielding cover 44 lies almost along the boundary B of the circumferential surface and side surface of the photosensitive strip material 42. Two fixing member 49 having 75 mm in outer diameter, 71 mm in inner diameter, 2 mm in thickness and 58 mm in width are inserted into the core 41 in both sides with pressure, and the edge portion 48 of the side light-shielding cover 44 is fixed between the core 41 and the fixing member 49.

The extending action of the photosensitive strip material from a magazine is described below. When the package is loaded in a magazine (not illustrated), as shown in Fig. 19, the end of the light-shielding leader 43 is pulled to extend from the slit of the magazine. In the above state, when the light-shielding leader 43 is pulled, as shown in Fig. 20, a force pulling inside in addition to a shearing force acts at the notch 46 of the side light-shielding cover 44, since the light-shielding leader 43 is adhered inside the notch 46 and the adhesion portion has a great physical strength, the side light-shielding cover 44 is torn along the adhesion boundary A without being torn inside. As a result, the light-shielding leader 43 and the heat sealed portion 45 of the side light-shielding cover 44 are pulled out off the magazine, while not heat-sealed portion 50 of the side light-shielding cover 44 remains on the side of the photosensitive strip material 42. When the light-shielding leader 43 is further pulled from the slit to be completely out of the magazine, as shown in Fig. 21, the light-shielding leader 43 is completely separated from the side light-shielding cover 44, as a result, a load to rotation of the roll of the photosensitive strip material is reduced.

A fixing member shown in Fig. 22 is made of a plastic resin and composed of a rim 54, boss 55 and an arm connecting them. The outer diameter of the rim 54 is slightly smaller than the inner diameter of the core 11, 21, 41, and the fixing member is inserted with pressure to fixed.

A fixing member shown in Fig. 23 is made of a plastic resin and composed of a tube portion 57 and a flange portion formed at the end of the tube portion 57. The outer diameter of the tube portion 57 is slightly smaller than the inner diameter of the core 11, 21, 41, and the fixing member is inserted with pressure to fixed. In the fixing member, since the flange portion 58 covers a folded portion of the end portion 17, 30, 48, even if pinhole occurs at the folded portion, light-shielding is sufficiently obtained. Moreover, the fixing material is not inserted inside the core 11, 21, 41 by the flange portion 58.

A fixing member shown in Fig. 24 is made of a plastic resin and composed of a tube portion 59 and four flexible plates 60 integrated with the tube portion 59. The outer diameter of the tube portion 59 is sligtly smaller than the inner diameter of the core 11, 21, 41 and the outer diameter of the flexible plate 60 is slightly longer than the inner diameter of the core 11, 21, 41, and the fixing material is sufficiently fixed in the core 11, 21, 41 by pressure of the flexible plate 60.

A fixing member shown in Fig. 25 is made of a plastic resin and composed of a rim 61, a boss 62 of which a outer diameter is same as the diameter of the rim 61 and a diameter gradually come to be short from the outer side to the inner side, and an arm 63 connecting them. The outer diameter of the rim 61 is slightly smaller than the inner diameter of the core 11, 21, 41, and the fixing member is fixed with pressure. In the fixing member, a hole of the boss 62 is formed in the shape of a funnel, therefore the fixing member is not easily catched with fingers, a insertion of fingers into the hole is prevented. As a result the fixing member is not pulled out with fingers.

In the example shown in Fig. 26, the end of the light-shielding cover 15 is folded outside, the outer surface of the folded portion is adhered to the light-shielding leader 13 by heat-sealing.

In the example shown in Fig. 27, the end of the light-shielding is folded inside, the upper surface of the folded portion which is on the circumferential surface of the photosensitive strip material is adhered to the light-shielding leader 13 by heat sealing.

In the example shown in Fig. 28, the end of the light-shielding leader 13 is folded outside, the upper face of the folded portion which is on the circumferential surface of the photosensitive strip material 12 is adhered to the end of the light-shielding cover 15.

In the example shown in Fig. 29, the inner end surface of the light-shielding leader 13 which is on the side surface of the photosensitive strip material 12 is adhered to near the end of the light-shielding cover by heat sealing. 30

In the example shown in Fig. 30, the end of the light-shielding cover 15 is folded outside at about 90 degrees, the upper surface of the folded portion is adhered to the end of light-shielding leader 13 by heat sealing.

In the example shown in Fig. 31, the end of the light-shielding cover 15 is folded inside at about 90 degrees, the folded portion lies on the end of the light-shielding leader 13, and they are connected with each other by adhesive tape 45 at the lower surface thereof.

In the example shown in Fig. 32, the light-shielding cover 15 is folded inside at about 90 degrees and the end surface of the folded light-shielding cover is faced to the end surface of the light-shielding 13, and the adhesive tape 65 is adhered to the lower surfaces thereof.

In the example shown in Fig. 33, the end of the light-shielding cover 15 is put between the ends of the light-shielding leader 13.13' and adhered to them in a peelable state, and the light-shielding leader 13.13' are sufficiently adhered at middle point.

## Claims

1. A package of a rolled photosensitive material which comprises:
a core (11);
a photosensitive strip material (12) wound around the core;
a light-shielding leader (13) having an inner surface facing the wound photosensitive strip material and an outer surface, and being connected with an end of the photosensitive strip material (12) to shield a circumferential surface of the wound photosensitive strip material from light; and
a pair of separate side light-shielding covers (15) each of which is adhered to said light-shielding leader (13) along an adhesion boundary (16) which substantially conforms to a boundary defined by the circumferential surface and the corresponding side surface of the wound photosensitive strip material, each side cover being folded and substantially lying in the plane of said side surface for fully shielding the corresponding side of the wound photosensitive strip material,
**characterized by**
each of said side light-shielding covers (15) being formed from a material which before folding is rectangular in shape and being adhered to the inner surface of a side edge of said light-shielding leader (13) in a peelable state so that the light-shielding leader (13) can be peeled from the light-shielding covers (15) along the adhesion boundary when the light-shielding leader is pulled out from the package.

2. A package of a rolled photosensitive material according to claim 1, wherein both side margins of the light-shielding covers (15) not adhered to the light-shielding leader are fixed within the core by a pair of fixing members (18) of which the outer diameter is slightly smaller than the inner diameter of the core.

3. A package of a rolled photosensitive material which comprises:
a core (41);
a photosensitive strip material (42) wound around the core;
a light-shielding leader (43) having an inner surface facing the wound photosensitive strip material and an outer surface, and being connected with an end of the photosensitive strip material (42) to shield a circumferential surface of the wound photosensitive strip material from light; and
a pair of separate side light-shielding covers (44) each of which is adhered to said light-shielding leader (43) along an adhesion boundary (A) which substantially conforms to a boundary defined by the circumferential surface and the corresponding side surface of the wound photosensitive strip material, each side cover being folded and substantially lying in the plane of said side surface for fully shielding the corresponding side of the wound photosensitive material, said covers (44) being made of a tearable material along the adhesion boundary (A),
**characterized by**
each of said side light-shielding covers (44) being formed from a material which before folding is rectangular in shape and being adhered to the inner surface of a side edge of said light-shielding leader (43) so that the light-shielding leader tears the covers along said adhesion boundary (A) when the light shielding leader is pulled out from the package.

4. A package of a rolled photosensitive material according to claim 3, wherein both side margins of the side light-shielding covers (44) not adhered to the light-shielding leader are fixed within the core by a pair of fixing members (49) of which the outer diameter is slightly smaller than the inner diameter of the core.

5. A package of rolled photosensitive material which comprises:
a core (21);
a photosensitive strip material (22) wound around the core;
a light-shielding leader (27) having an inner surface facing the wound photosensitive strip material, and an outer surface and being connected with an end of the photosensitive strip material (22) to shield a circumferential surface of the wound photosensitive strip material from light; and
a pair of side light-shielding covers (26) each of which adjoins to said light-shielding leader (27) along a line which substantially conforms to a boundary defined by the circumferential surface and the corresponding side surface of the wound photosensitive strip material, each side cover being folded and substantially lying in the plane of said side surface for fully shielding the corresponding side of the wound photosensitive strip material,
**characterized by**
said light-shielding leader (27) and said light-shielding covers (26) forming an integrated light-shielding member (23),
each of said side light-shielding covers (26) is rectangular in shape before folding and adjoins said light-shielding leader (27) such that the longitudinal axes at said light shielding leader (27) and said light-shielding covers (26) are essentially in parallel, and cutting means (28) in the form of an elongated element (28) being provided along said line and adhered to the inner surface of said light-shielding leader (27) such that the integrated light-shielding member is torn along said line, when the light shielding leader (27) is pulled out from the package.

6. A package of a rolled photosensitive material according to claim 5, wherein both side margins of the light-shielding covers (26) of said light shielding member (23) are fixed within the core by a pair of fixing members (18) of which the outer diameter is slightly smaller than the inner diameter of the core.

## Patentansprüche

1. Eine Verpackung für eine Rolle lichtempfindliches Material, umfassend:
einen Wickelkörper (11);
lichtempfindliches streifenförmiges Material (12), das auf dem Wickelkörper aufgewickelt ist;
einen lichtabschirmenden Vorspann (13), der eine innere Oberfläche, die dem aufgewickelten, lichtempfindlichen streifenförmigem Material gegenüberliegt, und eine äußere Oberfläche aufweist, und mit einem Ende des lichtempfindlichen streifenförmigen Materials (12) verbunden ist, um eine Umfangsoberfläche des aufgewickelten, lichtempfindlichen streifenförmigen Materials gegen Licht abzuschirmen; und
ein Paar getrennter lichtabschirmender Seitenabdeckungen (15), von denen jede an dem lichtabschirmenden Vorspann (13) entlang eines Adhäsionsrandes (16), der im wesentlichen mit einem Rand übereinstimmt, der durch die Umfangsoberfläche und die entsprechende Seitenfläche des aufgewickelten, lichtempfindlichen streifenförmigen Materials definiert ist, haftend angebracht ist, wobei jede Seitenabdeckung gefaltet ist und im wesentlichen in der Ebene der Seitenfläche zur vollständigen Abschirmung der entsprechenden Seite des aufgewickelten, lichtempfindlichen streifenförmigen Materials liegt,
**dadurch gekennzeichnet**,
daß jede lichtabschirmende Seitenabdeckung (15) aus Material gebildet ist, das vor dem Falten eine rechteckige Form hat und an die innere Oberfläche eines Seitenrandes des lichtabschirmenden Vorspanns (13) in einem abziehbaren Zustand haftend angebracht ist, so daß der lichtabschirmende Vorspann (13) von den lichtabschirmenden Seitenabdeckungen (15) entlang des Adhäsionsrandes abgezogen werden kann, wenn der lichtabschirmende Vorspann aus der Verpackung gezogen wird.

2. Eine Verpackung für eine Rolle lichtempfindliches Material nach Anspruch 1, in welcher die beiden Seitenbereiche der lichtabschirmenden Abdeckungen (15), die nicht an dem lichtabschirmenden Vorspann haftend angebracht sind, innerhalb des Wickelkörpers durch ein Paar Befestigungselemente (18), deren äußerer Durchmesser geringfügig kleiner als der innere Durchmesser des Wickelkörpers ist, befestigt sind.

3. Eine Verpackung für eine Rolle lichtempfindliches Material, umfassend:
einen Wickelkörper (41);
lichtempfindliches streifenförmiges Material (42), das auf dem Wickelkörper aufgewickelt ist;
einen lichtabschirmenden Vorspann (43), der eine innere Oberfläche, die dem aufgewickelten, lichtempfindlichen streifenförmigem Material gegenüberliegt, und eine äußere Oberfläche aufweist, und mit einem Ende des lichtempfindlichen streifenförmigen Materials (42) verbunden ist, um eine Umfangsoberfläche des aufgewickelten, lichtempfindlichen streifenförmigen Materials gegen Licht abzuschirmen; und
ein Paar getrennter lichtabschirmender Seitenabdeckungen (44), von denen jede an dem lichtabschirmenden Vorspann (43) entlang eines Adhäsionsrandes (A), der im wesentlichen mit einem Rand übereinstimmt, der durch die Umfangsoberfläche und die entsprechende Seitenfläche des aufgewickelten, lichtempfindlichen streifenförmigen Materials definiert ist, haftend angebracht ist, wobei jede Seitenabdeckung gefaltet ist und im wesentlichen in der Ebene der Seitenfläche zur vollständigen Abschirmung der entsprechenden Seite des aufgewickelten, lichtempfindlichen streifenförmigen Materials liegt, wobei die Seitenabdeckungen (44) entlang des Adhäsionsrandes (A) aus zerreißbarem Material bestehen,
**dadurch gekennzeichnet**,
daß jede lichtabschirmende Seitenabdeckung (44) aus Material gebildet ist, das vor dem Falten eine rechteckige Form hat und an die innere Oberfläche eines Seitenrandes des lichtabschirmenden Vorspanns (43) haftend angebracht ist, so daß der lichtabschirmende Vorspann die Abdeckungen entlang des Adhäsionsrandes (A) zerreißt, wenn der lichtabschirmende Vorspann aus der Verpackung gezogen wird.

4. Eine Verpackung für eine Rolle lichtempfindliches Material nach Anspruch 3, in welcher die beiden Seitenbereiche der lichtabschirmenden Abdeckungen (44), die nicht an dem lichtabschirmenden Vorspann haftend angebracht sind, innerhalb des Wickelkörpers durch ein Paar Befestigungselemente (49), deren äußerer Durchmesser geringfügig kleiner als der innere Durchmesser des Wickelkörpers ist, befestigt sind.

5. Eine Verpackung für eine Rolle lichtempfindliches Material, umfassend:
einen Wickelkörper (21);
lichtempfindliches streifenförmiges Material (22), das auf dem Wickelkörper aufgewickelt ist;
einen lichtabschirmenden Vorspann (27), der eine innere Oberfläche, die dem aufgewickelten, lichtempfindlichen streifenförmigem Material gegenüberliegt, und eine äußere Oberfläche aufweist, und mit einem Ende des lichtempfindlichen streifenförmigen Materials (22) verbunden ist, um eine Umfangsoberfläche des aufgewickelten, lichtempfindlichen streifenförmigen Materials gegen Licht abzuschirmen; und
ein Paar lichtabschirmender Seitenabdeckungen (26), von denen jede an dem lichtabschirmenden Vorspann (27) entlang einer Linie, die im wesentlichen mit einem Rand übereinstimmt, der durch die Umfangsoberfläche und die entsprechende Seitenfläche des aufgewickelten, lichtempfindlichen streifenförmigen Materials definiert ist, angrenzt, wobei jede Seitenabdeckung gefaltet ist und im wesentlichen in der Ebene der Seitenfläche zur vollständigen Abschirmung der entsprechenden Seite des aufgewickelten, lichtempfindlichen streifenförmigen Materials liegt,
**dadurch gekennzeichnet**,
daß der lichtabschirmende Vorspann (27) und die lichtabschirmenden Abdeckungen (26) ein integrales lichtabschirmendes Elements (23) bilden,
daß jede lichtabschirmende Seitenabdeckung (26) vor dem Falten eine rechteckige Form hat und an den lichtabschirmenden Vorspanns (27) so angrenzt, daß die Längsachsen des lichtabschirmenden vorspanns (27) und der lichtabschirmenden Seitenabdeckungen (26) im wesentlichen parallel sind, und eine Schneideeinrichtung (28) in der Form eines länglichen Elements (28) entlang der Linie vorgesehen ist und an der inneren Oberfläche des lichtabschirmenden Vorspanns (27) haftend angebracht ist, so daß das integrale lichtabschirmende Element entlang der Linie aufgerissen wird, wenn der lichtabschirmende Vorspann (27) aus der Verpackung gezogen wird.

6. Eine Verpackung für eine Rolle lichtempfindliches Material nach Anspruch 5, in welcher die beiden Seitenbereiche der lichtabschirmenden Abdeckungen (26) des lichtabschirmenden Elements (23) innerhalb des Wickelkörpers durch ein Paar Befestigungselemente (18), deren äußerer Durchmesser geringfügig kleiner als der innere Durchmesser des Wickelkörpers ist, befestigt sind.

## Revendications

1. Conditionnement d'une matière photosensible enroulée, qui comprend :
un noyau (11),
une matière photosensible en bande (12) enroulée autour du noyau,
une amorce (13) de protection contre la lumière ayant une surface interne tournée vers la matière photosensible enroulée en bande et une surface externe et raccordée à une extrémité de la matière photosensible en bande (12) afin qu'elle protège une surface circonférentielle de la matière photosensible en bande enroulée contre la lumière, et
deux couvercles latéraux séparés (15) de protection contre la lumière collés chacun à l'amorce (13) de protection contre la lumière le long d'une limite d'adhérence (16) qui correspond pratiquement à la limite formée par la surface circonférentielle et la surface latérale correspondante de la matière photosensible en bande enroulée, chaque couvercle latéral étant replié et se trouvant pratiquement dans le plan de la surface latérale afin que le côté correspondant de la matière photosensible en bande enroulée soit totalement protégé,
caractérisé en ce que
chacun des couvercles latéraux (15) de protection contre la lumière est formé d'une matière qui, avant pliage, a une forme complémentaire et est collée à la surface interne d'un bord latéral de l'amorce (13) de protection contre la lumière à un état pelable afin que l'amorce (13) de protection contre la lumière puisse être séparée par pelage des couvercles (15) de protection contre la lumière le long de la limite d'adnérence lorsque l'amorce de protection contre la lumière est tirée vers l'extérieur du conditionnement.

2. Conditionnement d'une matière photosensible enroulée selon la revendication 1, dans lequel les deux marges latérales des couvercles (15) de protection contre la lumière qui ne sont pas collées à l'amorce de protection contre la lumière sont fixées dans le noyau par une paire d'organes (18) de fixation dont le diamètre externe est légèrement inférieur au diamètre interne du noyau.

3. Conditionnement d'une matière photosensible enroulée, qui comprend :
un noyau (41),
une matière photosensible en bande (42) enroulée autour du noyau,
une amorce (43) de protection contre la lumière ayant une surface interne tournée vers la matière photosensible en bande enroulée et une surface externe, et raccordée à une extrémité de la matière photosensible en bande (42) afin qu'elle protège la surface circonférentielle de la matière photosensible en bande enroulée contre la lumière, et
une paire de couvercles latéraux séparés (44) de protection contre la lumière, collés chacun à l'amorce (43) de protection contre la lumière le long d'une limite d'adhérence (A) qui correspond pratiquement à une limite définie par la surface circonférentielle et la surface latérale correspondante de la matière photosensible en bande enroulée, chaque couvercle latéral étant replié et se trouvant pratiquement dans le plan de la surface latérale afin que le côté correspondant de la matière photosensible enroulée soit totalement protégé, les couvercles (44) étant formés d'une matière qui peut être déchirée le long de la limite d'adhérence (A),
caractérisé en ce que
chacun des couvercles latéraux (44) de protection contre la lumière est formé d'une matière qui, avant pliage, a une forme rectangulaire et qui est collée à la surface interne d'un bord latéral de l'amorce (43) de protection contre la lumière afin que l'amorce de protection contre la lumière déchire les couvercles le long de la limite d'adhérence (A) lorsque l'amorce de protection contre la lumière est écartée du conditionnement par traction.

4. Conditionnement d'une matière photosensible enroulée selon la revendication 3, dans lequel les deux marges latérales des couvercles latéraux (44) de protection contre la lumière qui ne sont pas collées à l'amorce de protection contre la lumière sont fixées à l'intérieur du noyau par une paire d'organes (49) de fixation dont le diamètre externe est légèrement inférieur au diamètre interne du noyau.

5. Conditionnement d'une matière photosensible enroulée qui comprend :
un noyau (21),
une matière photosensible en bande (22) enroulée autour du noyau,
une amorce (27) de protection contre la lumière, ayant une surface interne tournée vers la matière photosensible en bande enroulée, et une surface externe, et raccordée à une extrémité de la matière photosensible en bande (22) afin qu'elle protège une surface circonférentielle de la matière photosensible en bande enroulée contre la lumière, et
une paire de couvercles latéraux (26) de protection contre la lumière adjacents chacun à l'amorce (27) de protection contre la lumière suivant une ligne qui correspond pratiquement à une limite définie par la surface circonférentielle et la surface latérale correspondante de la matière photosensible en bande enroulée, chaque couvercle latéral étant replié et se trouvant pratiquement dans le plan de la surface latérale afin qu'il protège complètement le côté correspondant de la matière photosensible en bande enroulée,
caractérisé en ce que
l'amorce (27) de protection contre la lumière et les couvercles latéraux (26) de protection contre la lumière forment un organe intégré (23) de protection contre la lumière, et
chaque couvercle latéral (26) de protection contre la lumière a une forme rectangulaire avant d'être plié et est adjacent à l'amorce (27) de protection contre la lumière, si bien que les axes longitudinaux de l'amorce (27) de protection contre la lumière et les couvercles (26) de protection contre la lumière sont pratiquement parallèles,
un dispositif de coupe (28) sous forme d'un élément allongé (28) étant placé le long de ladite ligne et étant collé à la surface interne de l'amorce (27) de protection contre la lumière afin que l'organe intégré de protection contre la lumière soit déchiré le long de ladite ligne lorsque l'amorce (27) de protection contre la lumière est écartée du conditionnement par traction.

6. Conditionnement d'une matière photosensible enroulée selon la revendication 5, dans lequel les deux marges latérales des couvercles (26) de protection contre la lumière de l'organe (23) de protection contre la lumière sont fixées dans le noyau par une paire d'organes (18) de fixation dont le diamètre externe est légèrement inférieur au diamètre interne du noyau.
